Europäisches Patentamt

European Patent Office

Office européen des brevets

(11) Publication number: **0 183 560**
**B1**

(12) **EUROPEAN PATENT SPECIFICATION**

(45) Date of publication of patent specification: **08.08.90**

(21) Application number: **85308697.3**

(22) Date of filing: **29.11.85**

(51) Int. Cl.⁵: **G 06 F 15/347,** G 06 F 9/38,
G 06 F 15/16

(54) **A multiprocessor system.**

(30) Priority: **30.11.84 JP 252950/84**
**05.07.85 JP 147964/85**
**19.07.85 JP 159497/85**

(43) Date of publication of application:
**04.06.86 Bulletin 86/23**

(45) Publication of the grant of the patent:
**08.08.90 Bulletin 90/32**

(84) Designated Contracting States:
**DE FR GB**

(56) References cited:
**EP-A-0 105 125**
**US-A-4 152 763**

(73) Proprietor: **FUJITSU LIMITED**
**1015, Kamikodanaka Nakahara-ku**
**Kawasaki-shi Kanagawa 211 (JP)**

(72) Inventor: **Okamoto, Tetsuro c/o FUJITSU**
**LIMITED**
**Patent Department 1015 Kamikodanaka**
**Nakahara-ku Kawasaki-shi Kanagawa 211 (JP)**
Inventor: **Itoh, Mikio c/o FUJITSU LIMITED**
**Patent Department 1015 Kamikodanaka**
**Nakahara-ku Kawasaki-shi Kanagawa 211 (JP)**
Inventor: **Sakamoto, Kazushi c/o FUJITSU**
**LIMITED**
**Patent Department 1015 Kamikodanaka**
**Nakahara-ku Kawasaki-shi Kanagawa 211 (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Courier Press, Leamington Spa, England.

**Description**

The present invention relates to a multiprocessor system e.g. in the form of a large-scale general purpose data processing system or an ultra-high-speed data processing system, in particular, to a configuration allowing an increase in the processing power of a given hardware resource.

In scientific data processing systems, the following techniques are used for obtaining a high-speed processing capability.

a) Providing the unit responsible for processing instructions relevant to scientific computations with a relatively large data processing power; or

b) Forming a system with a multiprocessor configuration.

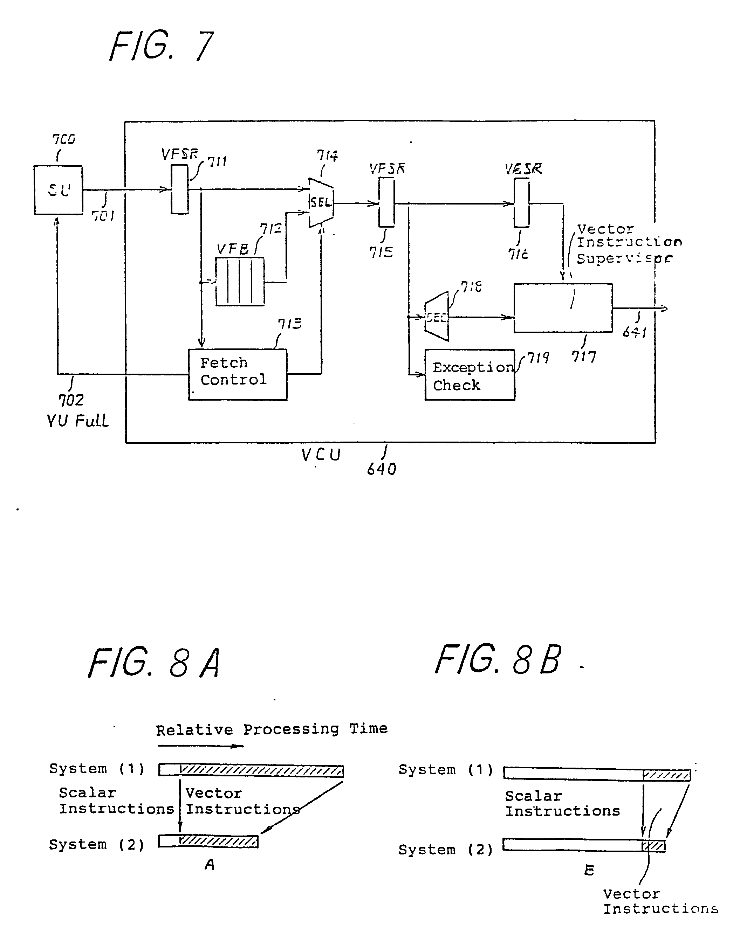

The processing speed achieved by the former technique varies depending on the proportion of instructions relevant to scientific computations (referred to as scientific instructions, hereinafter) in the totality of instructions processed in a system. Exemplary qualitative comparisons are given in Figs. 8A and 8B, wherein system (2) has a processing power twice that of system (1) in terms of the processing of scientific instructions.

Fig. 8A illustrates a case wherein the proportion of the scientific instructions, vector instructions, for example, is dominant over other instructions, scalar instructions, for example, and the whole processing time of the system (2) is reduced to about one half of the system (1). On the other hand, in a case where the proportion of the scalar instructions is dominant, a significant reduction in the whole processing time is not obtained, as shown in Fig. 8B. Thus, to simply increase the processing power for scientific instructions does not always improve the total through-put but may even worsen the optimum balance of a data processing system.

Accordingly, a multiprocessor configuration is generally devised to attain a further increase in the processing speed when an optimization of the system balance has been achieved in a single processor configuration.

However, even in a two-processor multi-system, the total through-put can be increased twice at best. Moreover, the through-put of a multiprocessor system becomes the same as that of a single processor system when only a single program runs on the system. The abovementioned problems of known multiprocessor systems will be discussed further by considering an example of a vector processing system as follows.

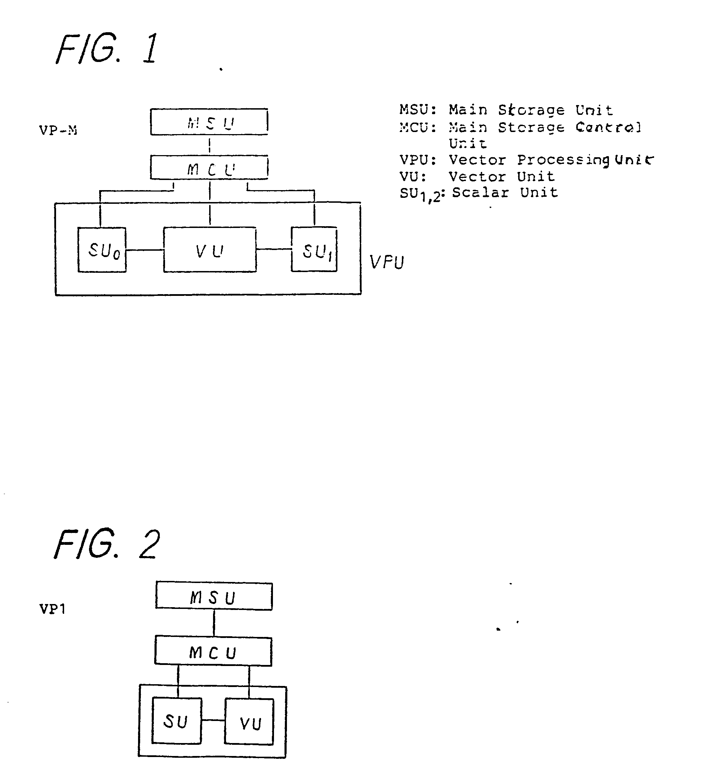

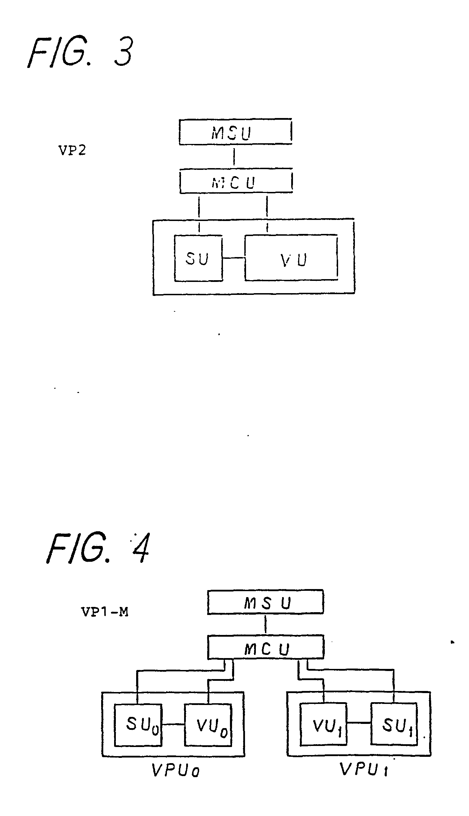

A vector processor comprises a vector instruction processing unit (simply referred to as vector unit (VU) hereinafter) for processing instructions relevant to scientific computations (vector instructions), a scalar instruction processing unit (simply referred to as scalar unit (SU) hereinafter) for processing other instructions (scalar instructions), and respective one common main storage unit MSU and main storage control unit MCU. A vector processor of a single processor configuration is shown by the block diagram of Fig. 2. The configuration of Fig. 2 is referred to as VP1, hereinafter. A vector processor comprising a vector unit VU having a processing power twice that of the vector unit in Fig. 2 is shown by the block diagram of Fig. 3. The configuration of Fig. 3 is referred to as VP2, hereinafter. The hardware resource of VU (amount of vector processing hardware) in VP2 is twice that in the configuration VP1 of Fig. 2. Further, a multiprocessor configuration comprising two vector processing units VPU0 and VPU1 each including a scalar unit (SU) and a vector unit (VU) which are the same as those in VP1 is shown by the block diagram of Fig. 4. The multiprocessor configuration of Fig. 4 is referred to as VP1-M, hereinafter.

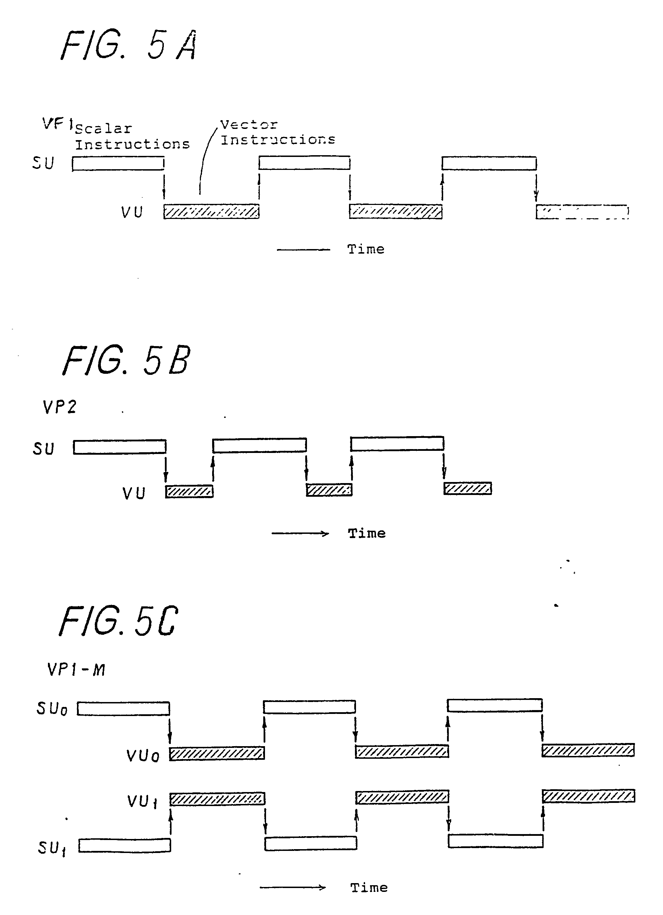

Program executions in the above processing systems are now compared with reference to Figs. 5A—5C, which schematically illustrate the time periods during which vector and scalar instructions are executed in the respective SUs and VUs of the processing systems shown in Figs. 2, 3 and 4. Figs. 5A, 5B and 5C respectively correspond to VP1, VP2 and VP1-M, wherein each white bar indicates an execution time during which scalar instructions are processed and each shaded bar indicates an execution time during which vector instructions are processed.

Comparing Fig. 5B with 5A, the execution time of vector unit VU in VP2 is one half of that of the VU in VP1, while the execution time of the scalar unit SU in VP2 remains unchanged with respect to that in VP1. In VP1-M as shown in Fig. 4, vector processor units VPU0 and VPU1 execute different respective programs, and the respective execution times of vector units VU0 and VU1 and scalar units SU0 and SU1 are the same as those in VP1, as shown in Fig. 5C, hence the total throughput of jobs of VP1-M is twice that of VP1.

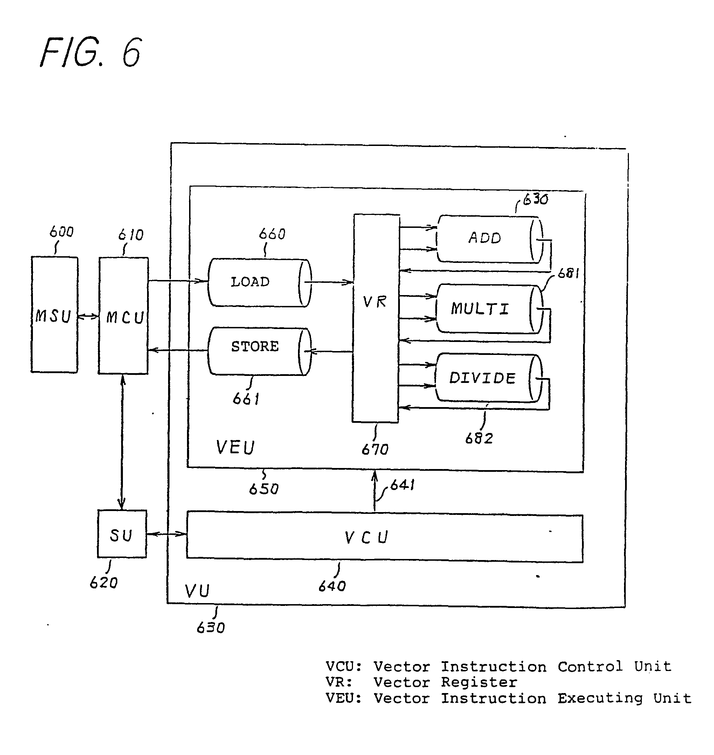

Fig. 6 is a block diagram for illustrating an exemplary configuration of a vector unit (VU) in a vector processor. In Fig. 6, each of a main storage unit (MSU) 600, main storage control unit (MCU) 610, scalar unit (SU) 620 and vector unit (VU) 630 is equivalent to the corresponding unit in Fig. 2. Vector instruction control unit (VCU) 640 controls the fetch of instructions from SU 620 and also controls instruction execution in a vector instruction executing unit (VEU) 650 by control signals sent via a bus line 641. The vector instruction executing unit VEU 650 comprises a vector register (VR) 670 for holding vector data, a load pipeline 660 for transmitting data from MSU 600 to VR 670, and a store pipeline 661 for transmitting data from VR 670 to MSU 600. VEU further comprises various pipelines including an add pipeline 680, a multiply pipeline 681 and a divide pipeline 682, all for executing instructions including those relevant to computations on the vector data read from the vector register VR 670 and others relevant to the write-in of the results in VR 670. In the vector processor unit (VPU), the scalar unit (SU) 620 performs the fetch of instructions from MSU 600. Of the fetched instructions, scalar instructions are executed in SU 620, while vector instructions are sent to VCU 640 in VU 630.

Fig. 7 is a block diagram for illustrating an exemplary configuration of the vector instruction control unit (VCU) 640 of Fig. 6, which receives vector instructions from a scalar unit. Referring to Fig. 7, each one of consecutive vector instructions fetched by an associated scalar unit (SU) 700 is input to a vector instruction fetch stage register (VFSR) 711 in VCU 640 via a line 701. When a vector instruction pre-decoding stage register (VPSR) 715, which is provided for storing instructions to be decoded by the decoder 718 and subjected to check by an exception check 719, is empty, the instruction stored in VFSR 711 is sent to VPSR 715. If VPSR 715 is occupied by a preceding instruction, or, if there is at least one preceding instruction in the vector instruction fetch buffer (VFB) 712, the vector instruction in the register VFSR 711 is stored in VFB 712. Each of the instructions stored in VFB 712 is input to VPSR 715 via a selector (SEL) 714 at a timing subsequent to when the preceding instruction passes through VSPR 715.

The above operation is controlled by a fetch control 713. That is, if there is no space in VFB 712, the fetch control 713 sends a VU Full signal 702 to SU 700 to stop the transmission of the vector instructions, and also instructs SEL 714 to select an instruction stored either in VFSR 711 or VFB 712, according to information on the state of occupation of VPSR 715 and VFB 712.

The vector instruction supervisor 717 stores the instructions sent from a vector instruction queuing stage register (VQSR) 716 and controls transmission of the stored instructions to the vector instruction executing unit (VEU) 650 shown in Fig. 6 via a bus line 641, according to information sent from a decoder (DEC) 718 and VQSR 716. The vector instruction supervisor 717 is also responsible for supervising the operation of VEU 650.

The vector unit (VU) in each of the aforesaid processors VP1, VP2 and VP1-M comprises a vector instruction control unit (VCU) as shown in Fig. 7. In VP2, the vector instruction executing unit (VEU) controlled by VCU has twice the hardware (twice the power) compared with the others and can process two units of data in each cycle. As described above, VP1-M includes two pairs of a scalar unit (SU) and a vector unit (VU) as shown in Fig. 4, one pair including SU0 and VU0 and the other pair SU1 and VU1, and has a throughput twice that of VP1. Although increased compared with VP1 as shown in Fig. 5B, the total throughput of VP2 is always lower than that of VP1-M in a multiprogramming environment wherein the vectorisation ratio (the ratio of vector instructions to all instructions including scalar instructions in a program) is less than 100%. A quantitative comparison of throughput characteristics of VP1, VP2 and VP1-M together with the multiprocessor system of the present invention will be discussed in detail later.

EP—A—0 105 125 discloses a data processing system having a plurality of scalar processing units and a single common vector processing unit shared by the scalar processing units. The vector processing unit has a decision circuit, which takes vector commands alternately from buffers corresponding to each of the scalar processing units, respectively, and decides whether each is executable. Executable commands are stored in a FIFO-type command stack of the vector processing unit ready for execution.

According to the present invention, there is provided a multiprocessor system including first and second type processing units operable for processing independently different kinds of instructions, comprising:

a plurality of said first type processing units; and

one said second type processing unit having a plurality of respective interfaces with said first type processing units;

wherein said second type processing unit is operable to switch to select one of said interfaces receiving instructions sent from its respective first type processing unit, and to process the received instructions therein;

characterised in that said switching is effected by instruction switching control means operable to switch from a selected one of said interfaces to another of the interfaces when a discontinuance or interruption occurs in the reception of instructions sent from the first type processing unit corresponding to said selected interface.

An embodiment of the present invention may provide a multiprocessor system having increased processing efficiency of a vector unit in a multiprocessing environment without a substantial increase in hardware resources.

The present invention incorporates the insight that the operating ratios of the vector units VU0 and VU1 in a VP1-M configuration system remain at a low level, in general. Therefore, in a multiprocessor system, a plurality of a first type of processor, scalar units, for example, are coupled with a second type of processor, a vector unit, for example, via corresponding interfaces provided in the second type of processor, and the second type processor operatively selects one of the first type processors by switching the connections to the interfaces, according to a discontinuance or interruption detected in the instructions sent from a selected one of the first type processors. Thus, the second type processor can alternatingly process instructions sent from the plurality of first type processors so as to maximise its operating ratio.

The selection control of the first type processors may be carried out by attaching an additional end-indicating instruction to each packet of queued instructions to be processed by the second type processor, or by detecting a blank in the packet of queued instructions sent from the selected first type processor to the second type processor. The right (priority) to use the second processor is automatically switched from a present selected first type processor to another first type processor, according to the detection of the end-indicating instruction or blank. Thus, contention (competition) among operations of the plural first type processors is eliminated and a reduction in the processing speed due to an overhead for contention control can be eliminated.

Therefore, an embodiment of the present invention may provide a multiprocessor system having a capability of speedy switching of its constituent processors.

Reference is made, by way of example, to the accompanying drawings in which:

Fig. 1 is a block diagram illustrating a simplified configuration of a vector processor embodying the present invention;

Figs. 2 and 3 are block diagrams of known vector processors of different single-processor configurations VP1, VP2;

Fig. 4 is a block diagram of a known vector processor of a multiprocessor configuration VP1-M;

Figs. 5A, 5B and 5C are schematic illustrations for comparing time periods for executing instructions by respective scalar and vector units of the processing systems shown in Figs. 2, 3 and 4;

Fig. 6 is a block diagram of an exemplary configuration of a vector unit VU in a vector processor;

Fig. 7 is a block diagram of an exemplary configuration of a vector instruction control unit (VCU) 640 in Fig. 6;

Figs. 8A and 8B are schematic comparisons showing the relationship between the proportion of vector instructions and the effect of increase in the vector instruction processing power;

Fig. 9 is a block diagram showing the essential configuration of a vector unit (VU) in an embodiment of the present invention;

Fig. 10 is a block diagram showing an exemplary circuit configuration of a VCU according to an embodiment of the present invention;

Figs. 11A and 11B are schematic comparisons of program execution by the vector processor VP-M shown in Fig. 1 with that by the multiprocessor VP1-M shown in Fig. 4;

Fig. 12 is a schematic illustration of the execution time of a program including scalar instruction packets and vector instruction packets in a VP1 configuration;

Figs. 13 and 14 illustrate execution time of concurrent processing of programs each being as shown in Fig. 12 in a VP-M configuration;

Figs. 15 and 16 are graphs showing throughput characteristics of VP2, VP1-M and VP-M configurations relative to VP1 as functions of a variable h;

Fig. 17 is a block diagram showing an exemplary circuit configuration in accordance with a second embodiment of the present invention, allowing contention control independent from a control program;

Fig. 18 is a chart illustrating an execution sequence of instructions according to the second embodiment of the present invention;

Fig. 19 is a block diagram showing another exemplary circuit configuration in accordance with a third embodiment of the present invention; and

Fig. 20 is a chart illustrating an execution sequence of instructions according to the third embodiment of the present invention.

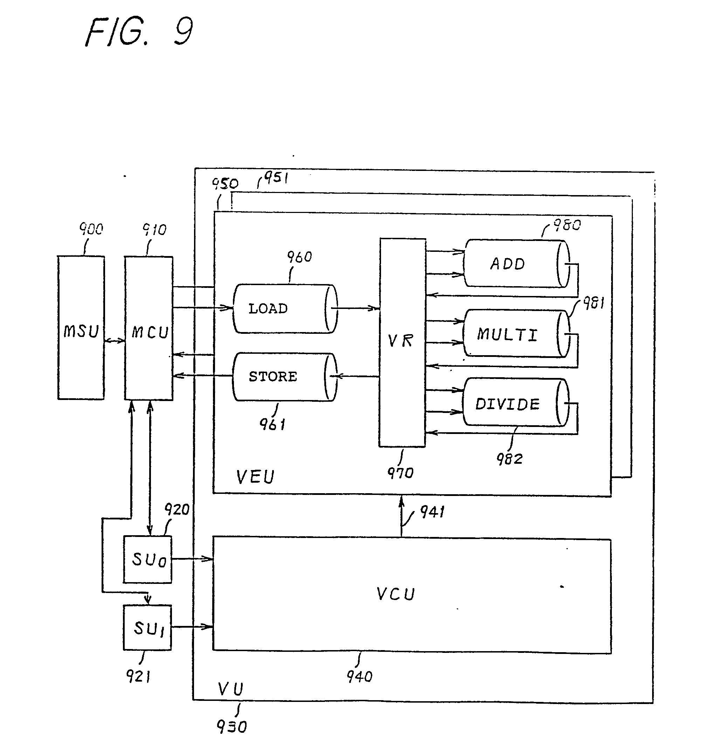

Fig. 1 is a block diagram illustrating a simplified configuration of a vector processor embodying the present invention. In Fig. 1, symbols MSU, MCU, SU0 and SU1 designate corresponding parts to those in Fig. 4. The essential configuration of the vector unit (VU) of Fig. 1 is shown in the block diagram of Fig. 9. In Fig. 9, each of a main storage unit (MSU) 900, main storage control unit (MCU) 910, and scalar units (SU0) 920 and (SU1) 921 is equivalent to the MSU 600, MCU 610 and SU 620 in Fig. 6. A vector instruction executing unit (VEU) 950 in vector unit (VU) 930 is substantially equivalent to VEU 650 in Fig. 6, and, therefore, the parts designated by references 960—982 correspond to the respective equivalents 660—682 in Fig. 6. A second vector instruction executing unit (VEU) 951 is the same as VEU 950; accordingly, twice the VEU hardware is incorporated in VU 930 compared with VEU 650 in Fig. 6. This means that the number of VEUs 950 and 951 in this embodiment is the same as the number of vector executing units VEU in the VP2 configuration shown in Fig. 3.

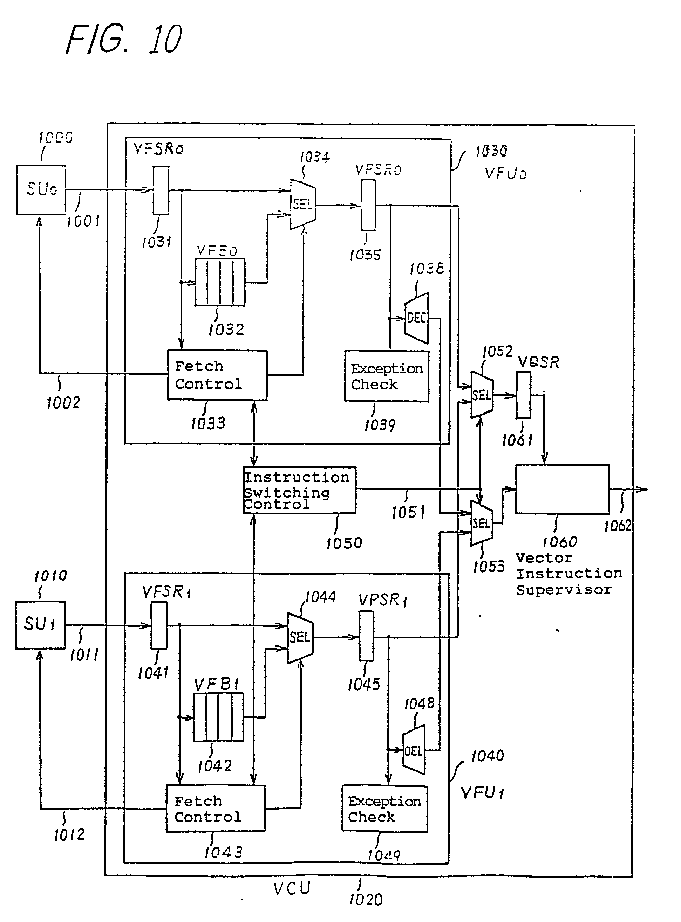

A vector instruction control unit VCU 940 is different from known vector instruction control units; however, a control signal 941 may be the same as in a known vector processor, VP2, for example. An exemplary circuit configuration of the VCU 940 is shown in the block diagram of Fig. 10. In Fig. 10, the parts designated by references 1000—1002 and 1010—1012 correspond to the respective equivalents 700—702 in Fig. 7, and each of first and second vector instruction fetch control units (VFU0 and VFU1) 1030 and 1040 has a configuration and functions essentially equivalent to the circuit composed of 711—715 and 718—719 in Fig. 7. That is, the parts designated by references 1031—1039 and 1041—1049 correspond to the respective equivalents 711—719 in Fig. 7. VFU0 1030 and VFU1 1040 can operate independently of each other to control instruction fetch by scalar units SU0 1000 and SU1 1010 respectively. They also receive and buffer the respective fetched instructions and perform decoding and exception check of the received instructions. Thus, the vector instruction fetch control units VFU0 1030 and VFU1 1040 function as interfaces with the respective scalar units SU0 1000 and SU1 1010.

An instruction switching control 1050 controls the selection of vector instructions sent either from SU0 1000 or SU1 1010. The respective vector instructions sent from SU0 1000 and SU1 1010 are referred to as 0-system vector instructions and 1-system vector instructions. Either the 0-system or 1-system vector instructions are selected to be input to a vector instruction supervisor 1060 and vector instruction queuing stage register (VQSR) 1061 in accordance with a control signal (select signal) 1051 sent from the instruction switching control 1050 to selectors 1052 and 1053. The vector instruction supervisor 1060, VQSR 1061, and a control signal 1062 sent to a vector instruction executing unit (not shown) have equivalents 717, 716 and 641 in Fig. 7.

The logic of the instruction switching control 1050 is established for example so that priority is given to 0-system vector instructions in an initial state and transferred to the 1-system vector instructions when a discontinuance occurs in the 0-system vector instructions or a wait is requested for the program for executing the 0-system vector instructions by an event.

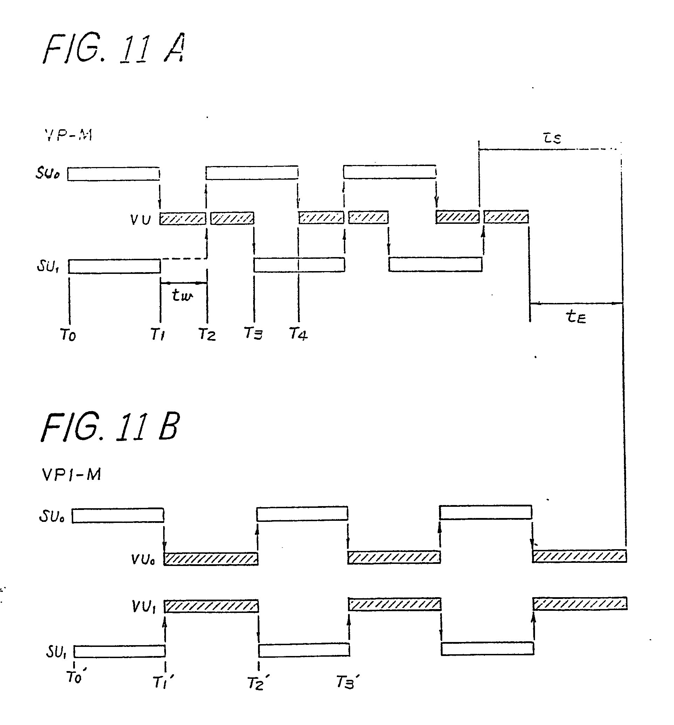

In Fig. 11A, an example of concurrent execution of programs by the vector processor VP-M of the present invention is schematically illustrated and compared with Fig. 11B schematically illustrating the execution of the same programs by the conventional multiprocessor VP1-M as shown in Fig. 4, wherein programs used to run on the processors are the same as used in Fig. 5C. Referring to Fig. 11A, scalar instructions are executed in the scalar units SU0 and SU1 during the period from T0 to T1, and no vector instructions are input to the vector unit VU. At T1, vector instructions are sent from both SU0 and SU1 to VU and are respectively input to corresponding VFU0 1030 and VFU1 1040 both shown in Fig. 10.

As described with reference to Fig. 10, since for example 0-system vector instructions are given priority by the instruction switching control 1050 in an initial state, execution of the 0-system vector instructions, i.e. the vector instructions sent from SU0, starts first in VU at a time T1, and execution of the 1-system vector instructions, i.e. the vector instructions sent from SU1, is made to wait during the period of tw, until execution of all of a sequence of consecutive 0-system vector instructions (referred to as an instruction packet) is completed. At a time T2, the execution of 0-system vector instructions in the first packet ends and the instruction switching control 1050 operates to switch execution to the first packet of 1-system vector instructions.

The execution time of instructions in VP-M compares with that in VP1-M as follows. Referring to Fig. 11 again, the execution time of each scalar instruction packet in VP-M is equal to that in VP1-M, however, the execution time of each vector instruction packet in VP-M is one half of that in VP1-M. This is because VU in VP-M has twice as much VEU hardware as each of VU0 and VU1 in VP1-M. That is, VU in VP-M is equal to the sum of VU0 and VU1 in VP1-M in terms of the power of VEU (vector instruction processing power). In Fig. 11, each of the periods between T1—T2 and T2—T3 is one half of the period between T1'—T2'. As a result, the total execution time in VP-M is shorter by $t_E$ than that in VP1-M.

The throughput time of a program is shorter by ts in VP-M than in VP1-M. The throughput ratio of VP-M and VP1-M is given by (in this example):

$$1/(T2-T0):1/(T2'-T0')=4:3$$

The reason for the increased throughput in VP-M is discussed further in the following.

As mentioned above, the time necessary to complete the execution of both 0-system and 1-system vector instruction packets is the same in VP-M and VP1-M. Therefore, the following relation is established.

$$T3-T1=T2'-T1'$$

However, in VP-M, execution of the first 0-system vector instruction packet ends at T2 at which execution of the subsequent scalar instruction packet can start. On the other hand, in VP1-M, both of 0-system and 1-system vector instruction packets are executed during the period T1'—T2' and then the respective subsequent scalar instruction packets are executed during T2'—T3'. That is, neither of executions of the (next) 0-system and 1-system scalar instruction packets can start until $T_2'$. Accordingly, the operating ratio of VU in VP-M is as large as 67% while the respective operating ratios of VU0 and VU1 in VP1-M remain at 50%, as derived below.

$$(T2'-T1')/(T3'-T1')\times100=50\%$$

$$(T3-T1)/(T4-T1)\times100=67\%$$

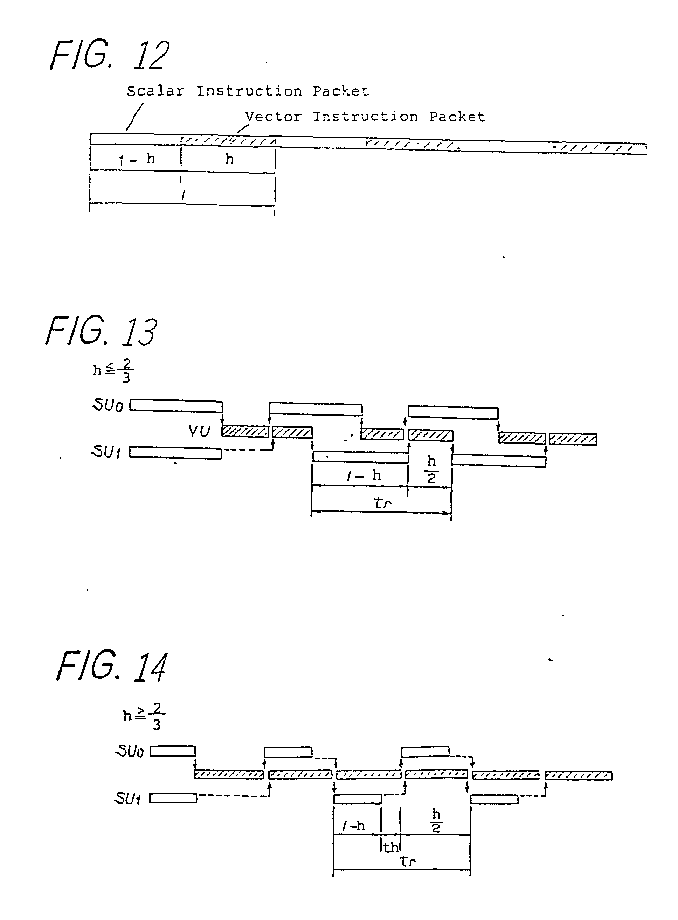

Quantitative performance comparison of VP-M with VP1-M, VP2 and VP1 is discussed in the following, wherein the relative performance of each of the processors is derived as a function of a variable "h" which indicates the amount (proportion) of execution time spent on vector instruction packets in a program running on VP1. Therefore, h has a value in the range of $0<h<1$ and the respective execution times of a scalar instruction packet and a vector instruction packet executed in VP1 are represented using h (i.e. by $(1-h)$ and h respectively) as shown in Fig. 12.

It should be remembered that when vector instruction packets in the program shown in Fig. 12 are executed in VP-M, the execution time of the vector instruction packets is one half of that in VP1. That is, the vector instruction packet execution time in VP-M may be represented by h/2. Therefore, if the execution time $(1-h)$ of the scalar instruction packets in the program shown in Fig. 12 is equal to the vector instruction packet execution time (h/2), the respective operating ratios of SU0, SU1 and VU in VP-M on which two programs each being shown in Fig. 12 run concurrently are 100%. In this situation, h becomes 2/3. Thus, the maximum operating ratio of VP-M can be attained at h=2/3. In the range of h larger or smaller than 2/3, the operating ratio decreases. Accordingly, the throughput of VP-M will now be evaluated in the respective ranges of $h \leqq 2/3$ and $h \geqq 2/3$ with reference to Figs. 13 and 14.

Fig. 13 is a schematic illustration of the execution time of concurrent processing of the Fig. 12 program in VP-M under the condition $h \leqq 2/3$. As mentioned before, the execution time of vector instruction packets in VP-M is one half of that in VP1, as represented by $h/2$, therefore, the execution time (tr) of all packets (a scalar packet and a vector packet) is given by

$$tr = 1 - h/2$$

and the total throughput (P) is represented as follows.

$$P = (1/tr) \times 2 = 4/(2-h) \tag{1}$$

Fig. 14 is a schematic illustration of the execution time of a concurrent processing of Fig. 12 programs in VP-M under the condition $h \geqq 2/3$. In this case, since the vector instruction packet execution time becomes larger than the scalar instruction packet execution time, a waiting time (th) occurs prior to the execution of each vector instruction packet except a preceding packet as shown in Fig. 14. The waiting time (th) is represented by

$$th = (h/2) - (1-h) = (3h/2) - 1$$

Accordingly we obtain

$$tr = 1 - h + th + (h/2) = h$$

and the total throughput (P) is given by

$$P = (1/tr) \times 2 = 2/h \tag{2}$$

Total throughput (P) of VP2 for the program as shown in Fig. 12 is given as follows.

$$P = 1/(1 - h + (h/2)) = 2/(2-h) \tag{3}$$

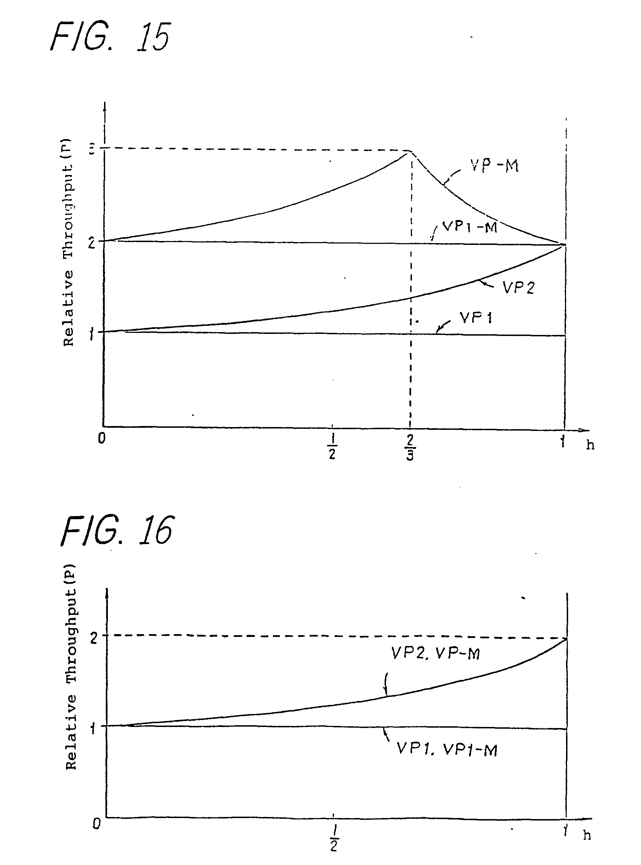

The throughput characteristics of VP2, VP1-M and VP-M relative to VP1 are shown in Fig. 15 as the functions of h as represented by the equations (1), (2) and (3). As shown in Fig. 15, the throughput of VP-M has a value ranging between 2—3 and is always larger than 2 of VP1-M. In particular, the throughput of VP-M becomes 1.5 times that of VP1-M at $h=2/3$. Also, the throughput of VP-M is always larger than that of VP2, showing a two-fold value in the range of h equal to or smaller than 2/3.

In the multiprocessing environment as in Fig. 15, VP-M and VP1-M have respective throughput characteristics always larger than those of VP1 and VP2, however, VP1-M can no longer have a larger throughput compared with VP1 and VP2 under a condition where only one program is executed therein. The throughput characteristics of these processors in execution of a single program are discussed below.

The execution time of VP-M for a single program can be represented by taking the execution of either 0-system or 1-system instructions in Fig. 13. Accordingly, total throughput (P) is given by

$$P = 1/tr = 2/(2-h) \tag{4}$$

Similarly, the throughput (P) of VP2 is given by

$$P = 2/(2-h) \tag{5}$$

The execution time of the single program in VP1-M can be represented by taking the execution of either 0-system or 1-system instructions in Fig. 11B, and the total throughput (P) is given by

$$P = 1 \tag{6}$$

The throughput characteristics of VP2, VP1-M and VP-M relative to VP1 are shown in Fig. 16 as the functions of h as represented by the equations (4), (5) and (6). As shown in Fig. 16, the throughput of VP1-M is equal to that of VP1 in the whole range of h. On the other hand, the relative throughput of VP-M, which always has the same throughput characteristic as VP2 when a single program is executed, increases as h becomes large, approaching twice the throughput of VP1-M at h near 1.

In a multiprocessor VP-M according to an embodiment of the present invention, an increase in hardware is required comprising the additional VFU1 and the circuits 1050—1053 relevant to the instruction switching in VCU as shown in Fig. 10, when compared with VP2. The total hardware amount is equivalent to that of VP1-M. On the other hand, the throughput of VP-M in a practical multiprocessing environment is assured to be around twice compared with that of VP2 and to be 1—1.5 times compared with that of VP1-M, as shown in Fig. 15.

When only a single program is running on the processors, the throughput of VP-M is assured to be as good as that of VP2, whereas the throughput of VP1-M decreases to the same level as that of VP1, as shown in Fig. 16.

The increase in the amount of hardware in VP-M does not cause any significant problem, if the VU circuitry including the additional hardware can be mounted all together on a printed circuit board. Although the above-described embodiment is provided with a VU having a processing power twice that of each VU in VP1-M, in another embodiment, if a VU having the same power as that of the VU in VP1-M (which is equivalent to the VU in VP1) is used for VP-M, the same throughput as that of VP1-M can still be obtained with a hardware amount decreased by one VEU.

Thus, a multiprocessor system having an improved throughput characteristic compared with a known multiprocessor system such as VP1-M, or alternatively a multiprocessor system requiring less hardware, can be provided thanks to the increase in the operating ratio of a VU according to the present invention.

As explained with reference to Fig. 10, in a first embodiment of the present invention the instruction switching control 1050 provides control signals for the selectors 1052 and 1053, both of which operate to select either vector instructions sent from the scalar unit SU0 1000 via VFU0 1030 or those sent from the scalar unit SU1 1010 via VFU1 1040. The selected vector instructions are input to the vector instruction supervisor 1060 and then sent to a vector instruction executing unit (VEU) as 950 or 951 in Fig. 9. Thus, contention (competition or conflict) between the vector instructions sent from SU0 and SU1 to VEU can be avoided. However, if contention control is carried out under a control program as in known multiprocessor systems, the processing speed must be decreased because of the overhead time required for the control.

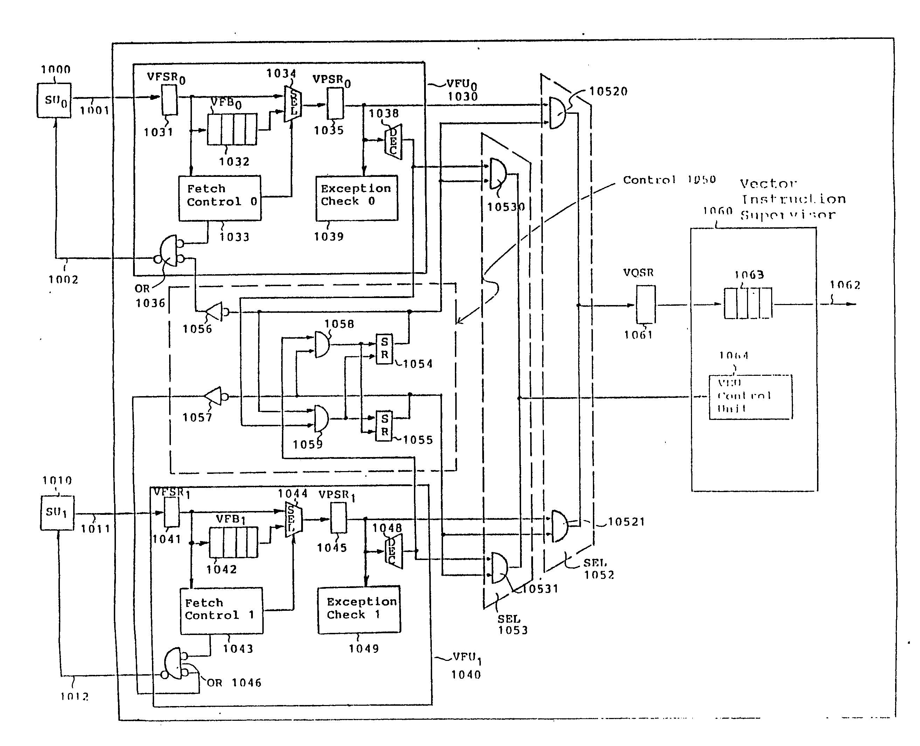

Fig. 17 is a block diagram showing an exemplary circuit configuration in accordance with a second embodiment of the present invention, wherein like numerals designate like or corresponding parts to those in Fig. 10. The circuit of Fig. 17 allows the aforesaid contention control to be performed independently from a control program. In this embodiment, each of the first type processing units, i.e. scalar units, outputs an extra instruction added at the end of each vector instruction packet to indicate the end of the packet. The extra instruction is referred to as a packet end instruction, hereinafter. When a second type processing unit, i.e. a vector unit, detects the packet end instruction in a vector instruction packet, it switches interfaces from one corresponding to the scalar unit which has sent the vector instruction packet including the detected packet end instruction to the other interface, corresponding to the other scalar unit.

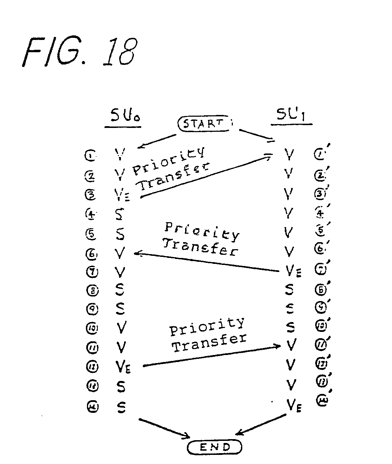

Fig. 18 is a chart illustrating an example execution sequence of instructions according to the second embodiment. In Fig. 18, respective strings of instructions (1)—(14) and (1')—(14') are fetched by the respective scalar units SU0 and SU1. V and S designate a vector instruction and a scalar instruction, respectively, and VE designates the aforesaid packet end instruction added to each of the vector instruction packets, comprising consecutive vector instructions (1)—(2) or (1')—(6') for example. The packet end instruction VE may arbitrarily be inserted in the consecutive vector instructions according to the programmer's requirement. That is, it is not compulsory for a packet end instruction VE to be included in a sequence of instructions.

If priority to use a vector unit (VU) has been given to SU0, the vector instructions (1)—(2) fetched by SU0 are sent first to the vector instruction executing unit VEU (not shown), according to the input of a START command, and executed therein. When a packet end instruction VE (3) is detected, priority is transferred to SU1, and the vector instructions (1')—(6') fetched by SU1 are sent to VEU and executed therein. When the packet end instruction VE (7') is detected, priority is transferred back to SU0. During the execution of the vector instructions (1')—(6') in VU, the scalar instructions (4)—(5) are executed in SU0; therefore, the vector instructions (6)—(7) are sent to VU after the completion of the execution of the scalar instructions (4)—(5), and executed therein.

Since there is no packet end instruction VE subsequent to the vector instruction (7), the priority is held by SU0, and the vector instructions (10)—(11) are sent from SU0 to VU after the scalar instructions (8)—(9) are executed. When packet end instruction VE (12) is detected, the priority is transferred again to SU1. Therefore, SU1 sends vector instructions (11')—(13') to VU after the execution of the scalar instructions (8')—(10') therein. SU0 ends its operation upon the completion of the execution of the scalar instruction (14), and SU1 upon the sending out of the packet end instruction VE (14').

Thus, contention control, i.e. the discharging of the priority to use the vector unit to either scalar unit, can be carried out speedily by simple software means such as the packet end instruction VE according to this embodiment, and hence, an optimum scheduling of the vector unit VU can be achieved.

Referring back to Fig. 17, when consecutive vector instructions are sent from a scalar unit (SU) 1000 to a vector instruction fetch stage register (VFSR0) 1031 via a line 1001, the instructions are transmitted to a vector instruction issuing buffer 1063 in the vector instruction supervisor 1060 via a selector (SEL) 1034, AND gate 10520 in the selector (SEL) 1052 and vector instruction queuing stage register (VQSR) 1061, when vector instruction fetch buffer (VFB0) 1032 and vector instruction pre-decoding stage register (VPSR0) 1035 are empty and the latch 1054 is in the set state so as to provide SU0 with the priority to use VU. Each of the vector instructions stored in the buffer 1063 is transmitted to a vector instruction excuting unit VEU (not shown) via a bus line 1062 and executed therein as explained with reference to Fig. 10.

The set-reset states of latches 1054 and 1055 are opposite to each other. That is, when the output of the latch 1054 is logically "1", the output of the latch 1055 is logically "0". Accordingly, when the priority to use VU is given to SU0, the vector instructions fetched by SU1 must wait in a vector instruction fetch buffer (VFB1) 1042 until the priority is given to SU1. When SU0 holds the priority to use VU, the "0" signal output from the latch 1055 is sent to SU1 via an inverter 1057, OR gate 1046 and line 1012 as a signal to inhibit the fetch of vector instructions. After receiving the fetch inhibiting signal, SU1 stops sending vector instructions to VU. The vector instructions fetched before the fetch inhibiting control are stored in VFB1 1042 via VFSR1 1041.

When an aforesaid packet end instruction (VE) is sent from SU0 to VU, the output of decoder (DEC) 1038 becomes logically "1", and AND gate 1059 outputs a signal of logically "1". As a result, the latch 1054 turns to the reset state and the latch 1055 turns to the set state. Accordingly, the "0" signal output from the latch 1054 is sent to SU0 via an inverter 1056, OR gate 1036 and line 1002 as a fetch inhibiting signal, and thus, the priority to use VU is transferred to SU1. The vector instructions stored in VFB1 are transmitted to the vector instruction issuing buffer 1063 in the vector instruction supervisor 1060 via a selector (SEL) 1044, AND gate 10521 in the selector (SEL) 1052 and vector instruction queuing stage register (VQSR) 1061, and then, issued to the vector execution unit VEU (not shown) via a bus line 1062.

In Fig. 17, a VEU control unit 1064 in the vector instruction supervisor 1060 controls operation of VEU, according to the information provided by the decoder 1038 and 1048 via the selector (SEL) 1053 comprising AND gates 10530 and 10531. The AND gates 10530 and 10531 are respectively activated by the set signals of the latches 1054 and 1055.

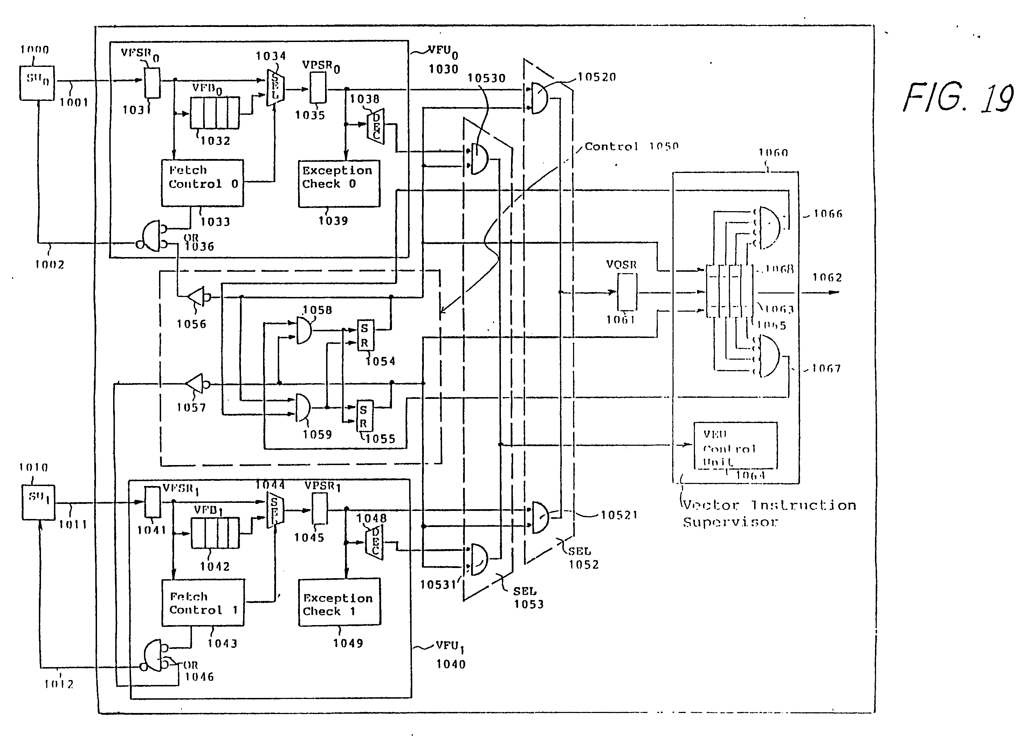

Fig. 19 is a block diagram showing another exemplary circuit configuration in accordance with a third embodiment of the present invention, wherein like numerals designate like or corresponding parts to those in Figs. 10 and 17. The circuit of Fig. 19 also allows the aforesaid contention control to be performed independently from a control program. In this embodiment, the second type processing unit, i.e. a vector unit, is provided with means for detecting a discontinuity or interruption in each of the strings of the vector instructions sent from the first type processing units, i.e. scalar units, to the vector unit. The end of each packet of the vector instructions is identified by the discontinuance, and thus, switching of the priority for use of the vector unit is performed based on the discontinuance detection.

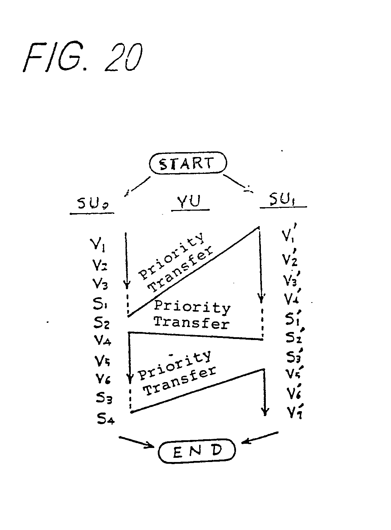

Fig. 20 is a chart illustrating execution of an example sequence of instructions according to the third embodiment. In Fig. 20, V and V' indicate vector instructions fetched by scalar units SU0 and SU1, respectively, and S and S' indicate scalar instructions fetched by SU0 and SU1, respectively.

If the priority to use a vector unit (VU) has been given to SU0, the vector instructions (V1—V3) fetched by SU0 are sent first to the vector instruction executing unit VEU (not shown) according to input of a START command and executed therein. When the subsequent scalar instructions (S1—S2) are executed in SU0, an interruption (discontinuance) occurs in the processing of the vector instructions being executed in VU. Hence, VU judges the discontinuance to be the end of the packet of vector instructions (V1—V3) and transfers priority to SU1. As a result, SU1 sends vector instructions (V1'—V4') to VU to be executed therein. When SU1 executes the subsequent scalar instructions (S1'—S3'), VU detects a discontinuance in the processing of the vector instructions (V1'—V4') and, hence, transfers back the priority to SU0.

Similarly, the vector instructions (V4—V6) subsequent to the scalar instructions (S1—S2) are executed in VU, and further, the vector instructions (V5'—V7') subsequent to the scalar instructions (S1'—S3') are executed in VU after priority transfer to SU1 according to the discontinuance detected during execution of the scalar instructions (S3—S4).

In this embodiment, detection of the discontinuance may be carried out by using a flag attached to each of the vector instructions stored in the vector instruction issuing buffer 1063. Referring back to Fig. 19, registers 1068 and 1065 for storing flag bits are provided for the vector instruction issuing buffer 1063 in the vector instruction supervisor 1060. That is, each bit of the registers 1068 or 1065 is allotted for a flag bit corresponding to each stack of the vector instruction issuing buffer 1063.

When the priority to use VU is given to SU0, vector instructions fetched by SU0 are transmitted via selector (SEL) 1034 and AND gate 10520 in the selector (SEL) 1052 to the vector instruction issuing buffer 1063 and stored therein. Synchronizing with the input of each vector instruction into the vector instruction issuing buffer 1063, the output signal of the latch 1054 which is in the set state is input to the register 1068 and stored in each bit thereof as a corresponding flag of logical "1".

As the vector instructions stored in the vector instruction issuing buffer 1063 are sent out to a vector instruction executing unit (VEU; not shown) via a bus line 1062 so as to be executed therein, the vector instruction issuing buffer 1063 becomes empty. At this moment (when buffer 1063 is completely empty), all of the flag bits in the register 1068 are logically "0" because the flags corresponding the instructions which have been issued to VEU are made invalid, and hence, a signal of logical "1" is output from NOR gate 1066. As a result, the output of AND gate 1059 becomes logically "1", and latch 1055 turns to the set state. Accordingly, the priority to use VU is transferred to SU1 in the same manner as in the second embodiment explained with reference to Fig. 17, and the vector instructions stored in vector instruction fetch buffer (VFB) 1042 are transmitted via selector (SEL) 1044 and AND gate 10521 in the selector (SEL) 1052 to the vector instruction issuing buffer 1063 and stored therein. In this sequence, the output signal of the latch 1055 which is now in the set state is input to the register 1065 and stored in each bit thereof as the corresponding flag of logical "1".

The vector instructions stored in the vector instruction issuing buffer 1063 are sent to VEU (not shown) via the bus line 1062 so as to be executed therein, and the vector instruction issuing buffer 1063 becomes empty. At this moment, all the flag bits in the register 1065 are logically "0", and NOR gate 1067 outputs a signal of logical "1". Accordingly, the latches 1054 and 1055 are turned to the set and reset states, respectively, and the priority is transferred back to SU0. The above described transfer process of the priority to use VU can be repeated as necessary.

As described above, in this embodiment, the instruction switching control 1050 operatively switches to select the connections to the interfaces, the vector instruction fetch control units VFU0 and VFU1, according to flags informing of the absence of vector instructions in the vector instruction issuing buffer 1063 provided in the vector instruction supervisor 1060.

It will be understood that the invention is not limited in its application to the details of construction and arrangement of parts illustrated in the accompanying drawings, since the invention as claimed is capable of other embodiments and of being practiced or carried out in various ways. For example, in other embodiments of the present invention three or more scalar units (SU) may be provided in the multiprocessor configuration. Also, it is to be understood that the phraseology or terminology employed herein is for the purpose of description and not of limitation.

The scope of the present invention, therefore, is to be determined solely by the following claims.

In particular, embodiments of the present invention may provide a multiprocessor system of a vector processor type including two or more scalar units and one vector unit. Priority for use of the vector unit by the scalar units is switched from one scalar unit to another scalar unit by detecting an interruption in the instructions under execution in the vector unit. The discontinuance detection may be performed by adding an instruction at the end of a packet of instructions being executed or to be executed in the vector unit, or performed by detecting the absence of instructions in a buffer which stores instructions to be executed. The quantitative throughput characteristic and operating ratio of the vector unit of the multiprocessor system is improved in comparison with known multiprocessor systems.

## Claims

1. A multiprocessor system including first and second type processing units operable for processing independently different kinds of instructions, comprising:

a plurality of said first type processing units (1000, 1010); and

one said second type processing unit (930) having a plurality of respective interfaces (1030, 1040) with said first type processing units;

wherein said second type processing unit (930) is operable to switch to select one of said interfaces (1030, 1040) receiving instructions sent from its respective said first type processing unit, and to process the received instructions therein;

characterised in that said switching is effected by instruction switching control means (1050) operable to switch from a selected one of said interfaces (e.g. 1030) to another of the interfaces (e.g. 1040) when a discontinuance or interruption occurs in the reception of instructions sent from the first type processing unit (e.g. 1000) corresponding to said selected interface.

2. A multiprocessor system as set forth in claim 1, wherein said first type processing units (1000, 1010) are scalar instruction processing units for processing scalar instructions and said second type processing unit (930) is a vector instruction processing unit for processing vector instructions.

3. A multiprocessor system as set forth in claim 1 or 2, wherein consecutive instructions are grouped in plural instruction packets and the said first type processing unit (e.g. 1000) corresponding to a currently selected interface (e.g. 1030) is operable to send out the instructions in one of the instruction packets one after another to said second type processing unit (930), wherein each instruction packet is provided with an additional instruction (VE), for indicating end of the packet, at the end of the packet and said second type processing unit (930) is operable to switch from the selected interface (e.g. 1030) to another one (e.g. 1040) upon detecting said additional instruction (VE), whereby instructions in respective instruction packets sent from said first type processing units may be selectively processed in said second type processing unit (930).

4. A multiprocessor system as set forth in claim 1 or 2, wherein consecutive instructions are grouped in plural instruction packets and the said first type processing unit (e.g. 1000) corresponding to a currently selected interface (e.g. 1030) is operable to send out the instructions in one of the instruction packets one after another to said second type processing unit (930), further comprising a buffer (1063) provided in said second type processor, said buffer being provided for storing instructions of the instruction packet sent from the first type processing unit corresponding to the currently selected interface, wherein said second type processing unit (930) is operable to switch from the selected interface (e.g. 1030) to another one (e.g. 1040) upon detecting an absence of instructions in said buffer (1063),

whereby instructions in respective instruction packets sent from said first type processing units (1000, 1010) may be selectively processed in said second type processing unit (930).

5. A multiprocessor system as set forth in claim 4, wherein said buffer (1063) comprises a plurality of extra bits (1065, 1068) each of which may correspond to an instruction stored in said buffer, there being an AND gate (1066, 1067) having inputs each connected to a respective one of said extra bits, said extra bits being provided for storing information of the presence or absence of corresponding instructions in said buffer (1063), and said second type processing unit (930) being operable to switch said interfaces (1030, 1040) in accordance with the output signal of said AND gate (1066, 1067).

## Patentansprüche

1. Multiprozessorsystem mit Prozessoreinheiten von einem ersten und von einem zweiten Typ zur unabhängigen Verarbeitung verschiedener Arten von Instruktionen, mit:

einer Vielzahl von Prozessoreinheiten (1000, 1010) von dem genannten ersten Typ; und

eine genannte Prozessoreinheit (930) vom zweiten Typ hat eine Vielzahl von jeweiligen Schnittstellen (1030, 1040) mit den genannten Prozessoreinheiten vom ersten Typ;

wobei die genannte Prozessoreinheit (930) vom zweiten Typ betreibbar ist, um zu schalten, um eine der Schnittstellen (1030, 1040) auszuwählen, die Instruktionen empfangen, welche von ihrer entsprechenden Prozessoreinheit vom genannten ersten Typ gesendet werden, und um die empfangenen Instruktionen darin zu verarbeiten;

dadurch gekennzeichnet, daß das genannte Schalten durchgeführt wird durch eine Instruktionsschaltsteuereinrichtung (1050), die betreibbar ist, um von einer ausgewählten der genannten Schnittstellen (z.B. 1030) zu einer anderen der Schnittstellen (z.B. 1040) umzuschalten, wenn eine Diskontinuität oder Unterbrechung beim Empfang der Instruktionen auftritt, die von der Verarbeitungseinheit (z.B. 1000) vom ersten Typ gesendet wird, welche der genannten ausgewählten Schnittstelle entspricht.

2. Multiprozessorsystem nach Anspruch 1, bei dem die genannten Prozessoreinheiten (1000, 1010) vom ersten Typ Skalarinstruktionseinheiten zur Verarbeitung skalarer Instruktionen sind, und die genannte Prozessoreinheit (930) vom zweiten Typ eine Vektorinstruktionsverarbeitungseinheit zur Verarbeitung von Vektorinstruktionen ist.

3. Multiprozessorsystem nach Anspruch 1 oder 2, bei dem konsekutive Instruktionen in einer Vielzahl von Instruktionspaketen gruppiert sind und die genannte Prozessoreinheit (z.B. 1000) vom ersten Typ, die einer gegenwärtig ausgewählten Schnittstelle (z.B. 1030) entspricht, betreibbar ist, um Instruktionen in einem der Instruktionspakete eine nach der anderen zu der genannten Prozessoreinheit (930) vom zweiten Typ zu senden, wobei jedes Instruktionspaket mit einer zusätzlichen Instruktion (VE) versehen ist, um das Ende des Paketes anzuzeigen, an dem Ende des Paketes, und die genannte Prozessoreinheit (930) vom zweiten Typ betreibbar ist, um von der ausgewählten Schnittstelle (z.B. 1030) zu einer anderen (z.B. 1040) umzuschalten, bei Detektion der genannten zusätzlichen Instruktion (VE), wodurch Instruktionen in jeweiligen Instruktionspaketen, die von den genannten Prozessoreinheiten vom ersten Typ gesendet werden, in der Prozessoreinheit (930) vom genannten zweiten Typ selektiv verarbeitet werden können.

4. Multiprozessorsystem nach Anspruch 1 oder 2, bei dem konsekutive Instruktionen in einer Vielzahl von Instruktionspaketen gruppiert sind und die genannte Prozessoreinheit (z.B. 1000) vom ersten Typ, die einer gegenwärtig ausgewählten Schnittstelle (z.B. 1030) entspricht, betreibbar ist, um die Instruktionen in einem der Instruktionspakete eine nach der anderen zu der genannten Prozessoreinheit (930) vom zweiten Typ auszusenden, ferner mit einem Puffer (1063), der in dem genannten Prozessor vom zweiten Typ vorgesehen ist, welcher genannte Puffer zur Speicherung von Instruktionen des Instruktionspaketes vorgesehen ist, welches von der Prozessoreinheit vom ersten Typ gesendet wird, die der gegenwärtig ausgewählten Schnittstelle entspricht, wobei die genannte Prozessoreinheit (930) vom zweiten Typ betreibbar ist, um bei Detektion einer Abwesenheit von Instruktionen in dem genannten Puffer (1063) von der ausgewählten Schnittstelle (z.B. 1030) zu einer anderen (z.B. 1040) umzuschalten,

wodurch Instruktionen in jeweiligen Instruktionspaketen, die von den genannten Prozessoreinheiten (1000, 1010) vom ersten Typ ausgesendet werden, in der genannten Prozessoreinheit (930) vom zweiten Typ selektiv verarbeitet werden können.

5. Multiprozessorsystem nach Anspruch 4, bei dem der genannte Puffer (1063) eine Vielzahl von Extrabits (1065, 1068) umfaßt, von denen jedes einer in dem genannten Puffer gespeicherten Instruktion entsprechen kann, wobei ein UND-Gatter (1066, 1067) vorgesehen ist, das Eingänge hat, die jeweils mit einem entsprechenden der genannten Extrabits verbunden sind, welche genannten Extrabits zur Speicherung von Information über das Vorhandensein oder der Abwesenheit von entsprechenden Instruktionen in dem genannten Puffer (1063) vorgesehen sind, und die genannte Prozessoreinheit (930) vom zweiten Typ betreibbar ist, um die genannten Schnittstellen (1030, 1040) in Übereinstimmung mit dem Ausgangssignal des genannten UND-Gatters (1066, 1067) zu schalten.

## Revendications

1. Système de multiprocesseur comprenant des unités de traitement d'un premier et d'un second types ayant pour fonction de traiter indépendamment des types différents d'instructions, comportant:

plusieurs desdites unités de traitement du premier type (1000, 1010), et

une desdites unités de traitement du second type (930) comprenant plusieurs interfaces respectives (1030, 1040) avec lesdites unités de traitement du premier type;

dans lequel ladite unité de traitement dudit second type (930) a pour fonction de commuter pour sélectionner l'une desdites interfaces (1030, 1040) recevant des instructions émises par son unité de traitement dudit premier type et pour y traiter les instructions reçues;

caractérisé en ce que ladite commutation est effectuée par un dispositif de commande de commutation d'instructions (1050) ayant pour fonction de commuter de l'une sélectionnée desdites interfaces (p.e. 1030) vers une autre des interfaces (p.e. 1040) lorsqu'une discontinuité ou une interruption apparaît dans la réception d'instructions émises par l'unité de traitement du premier type (p.e. 1000) correspondant à ladite interface sélectionnée.

2. Système de multiprocesseur selon la revendication 1, dans lequel lesdites unités de traitement du premier type (1000, 1010) sont des unités de traitement d'instructions scalaires destinées à traiter des instructions scalaires et ladite unité de traitement dudit second type (930) étant une unité de traitement d'instructions vectorielles pour traiter des instructions vectorielles.

3. Système de multiprocesseur selon la revendication 1 ou 2, dans lequel des instructions consécutives sont groupées en plusieurs paquets d'instructions et ladite unité de traitement du premier type (p.e. 1000) correspondant à une interface actuellement sélectionnée (p.e. 1030) ayant pour fonction d'émettre les instructions dans l'un des paquets d'instructions, l'un après l'autre, vers ladite unité de traitement du second type (930), dans lequel chaque paquet d'instructions est muni d'une instruction supplémentaire (VE) indiquant la fin du paquet, à la fin du paquet et ladite unité de traitement dudit second type (930) ayant pour fonction de passer de l'interface sélectionnée (p.e. 1030) à une autre (p.e. 1040) à la détection de ladite instruction supplémentaire (VE) de manière que des instructions dans des paquets d'instructions respectifs émis par lesdites unités de traitement du premier type puissent être traitées sélectivement dans ladite unité de traitement du second type (930).

4. Système de multiprocesseur selon la revendication 1 ou 2, dans lequel des instructions consecutives sont groupées en plusieurs paquets d'instructions et ladite unité de traitement du premier type (p.e. 1000) correspondant à une interface actuellement sélectionnée (p.e. 1030) ayant pour fonction d'émettre les instructions dans l'un des paquets d'instructions l'un après l'autre vers ladite unité de traitement du second type (930) comportant en outre un tampon (1063) prévu dans ledit processeur du second type, ledit tampon étant prévu pour mémoriser des instructions de paquets d'instructions émis par l'unité de traitement dudit premier type correspondant à l'interface actuellement sélectionnée, dans lequel ladite unité de traitement du second type (930) a pour fonction de passer de l'interface sélectionnée (p.e. 1030) à une autre (p.e. 1040) à la détection d'une absence d'instruction dans ledit tampon (1063) de manière que des instructions dans les paquets d'instructions respectifs émis par lesdites unités de traitement du premier type (1000, 1010) puissent être traîtées sélectivement dans l'unité de traitement dudit second type (930).

5. Système de multiprocesseur selon la revendication 4, dans lequel ledit tampon (1063) comports plusieurs bits supplémentaires (1065, 1068) dont chacun peut correspondre à une instruction mémorisée dans ledit tampon, une porte ET (1066, 1067) étant prévue, comprenant des entrées connectées chacune à l'un respectif desdits bits supplémentaires, lesdits bits supplémentaires étant prévus pour mémoriser des informations sur la présence ou l'absence d'instructions correspondantes dans ledit tampon (1063) et l'unité de traitement dudit second type (930) ayant pour fonction de commuter lesdites interfaces (1030, 1040) en fonction du signal de sortie de ladite porte ET (1066, 1067).

# FIG. 1

VP-M

MSU: Main Storage Unit
MCU: Main Storage Control
Unit
VPU: Vector Processing Unit
VU: Vector Unit
SU$_{1,2}$: Scalar Unit

# FIG. 2

VP1

# FIG. 3

VP2

# FIG. 4

VP1-M

## FIG. 5 A

VF1 Scalar Instructions / Vector Instructions

SU

VU

——— Time

## FIG. 5 B

VP2

SU

VU

———▶ Time

## FIG. 5 C

VP1-M

SU₀

VU₀

VU₁

SU₁

———▶ Time

# FIG. 6

VCU: Vector Instruction Control Unit
VR:  Vector Register
VEU: Vector Instruction Executing Unit

4

# FIG. 7

# FIG. 8 A

Relative Processing Time

System (1)
Scalar
Instructions | Vector Instructions

System (2)

A

# FIG. 8 B

System (1)
Scalar
Instructions

System (2)

B

Vector
Instructions

# FIG. 9

# FIG. 10

# FIG. 11 A

VP-M

SU₀

VU

SU₁

tw

T₀   T₁   T₂   T₃   T₄

ts

tE

# FIG. 11 B

VP1-M

SU₀

VU₀

VU₁

SU₁

T₀′   T₁′   T₂′   T₃′

## FIG. 12

Scalar Instruction Packet

Vector Instruction Packet

## FIG. 13

$$h \leqq \frac{2}{3}$$

## FIG. 14

$$h \geqq \frac{2}{3}$$

FIG. 15

FIG. 16

# FIG. 18

FIG. 19

VFU₀ 1030

VFSR₀
1031
VFB₀
1032
1034 SEL
VPSR₀
1035
1038 DEC
Fetch Control 0
1033
Exception Check 0
1039
OR 1036

1000 SU₀ 1001
1002

10530
10520
Control 1050

1056
1058
SR 1054
1057
1059
SR 1055

1060
1066
VQSR 1061
1068 1062
1063
1065
1067

VFU Control Unit 1064

Vector Instruction Supervisor

1010 SU₁ 1011
1012

VFSR₁
1041
VFB₁
1042
1044 SEL
VPSR₁
1045
1048 DEC
Fetch Control 1
1043
Exception Check 1
1049
OR 1046

VFU₁ 1040

10531
SEL 1053
SEL 1052
10521

# FIG. 20